# EUROPÄISCHE PATENTSCHRIFT

(11) **EP 1 550 394 B1**
(45) Veröffentlichungstag und Bekanntmachung des Hinweises auf die Patenterteilung: **23.12.2009**
(21) Anmeldenummer: 04028779.9
(22) Anmeldetag: 04.12.2004
(51) Int. Cl.: A47L 5/38, F16M 13/02

(54) **Zentralstaubsauger**
Central vacuum cleaning system
Unité centrale d'aspiration

(30) Priorität: 02.01.2004 AT 204 U
(43) Veröffentlichungstag der Anmeldung: 06.07.2005
(73) Patentinhaber: Wiedemann, Thomas, A-6850 Dornbirn (AT)
(72) Erfinder: Wiedemann, Thomas, A-6850 Dornbirn (AT)
(74) Vertreter: Hofmann, Ralf U.

(56) Entgegenhaltungen:
- DE-U1- 20 118 467
- US-A- 3 127 629
- US-A- 4 944 780
- US-A- 5 400 463

## Beschreibung

Die Erfindung betrifft einen Zentralstaubsauger mit einem Gehäuse, einem Ansaugstutzen, durch den ein Saugkanal führt, und einer Wandhalteeinrichtung, mittels der der Zentralstaubsauger an einer Wand aufhängbar ist, wobei die Wandhalteeinrichtung eine am Gehäuse befestigte Halteplatte und einen an der Wand zu befestigenden Wandhalter umfasst und an der Halteplatte und am Wandhalter ineinander einhängbare Verbindungselemente angeordnet sind, wobei der Ansaugstutzen an der Halteplatte angeordnet ist, wobei der Saugkanal die Halteplatte durchsetzt.

Zentralstaubsaugersysteme weisen einen Zentralstaubsauger auf, der üblicherweise im Keller eines Gebäudes angeordnet ist und von dem ein Saugleitungssystem zu Sauganschlussdosen in verschiedenen Räumen des Gebäudes führt. Die Verbindung mit dem Saugleitungssystem erfolgt über einen Anschlussstutzen des Zentralstaubsaugers, der mittels eines Befestigungsteils am Gehäuse befestigt ist und hierbei über einem Saugeinlass des Gehäuses angeordnet ist, sodass ein Saugkanal durch den Ansaugstutzen in das Innere des Gehäuses des Zentralstaubsaugers führt.

Solche Zentralstaubsauger werden üblicherweise an einer Gebäudewand aufgehängt. Hierzu wird weiters am Gehäuse des Zentralstaubsaugers eine Halteplatte befestigt und an der Wand ein Wandhalter befestigt, wobei die Halteplatte und der Wandhalter ineinander einhängbare Verbindungselemente aufweisen, insbesondere können an der Halteplatte Hakenelemente angeordnet sein, die in Einhängeöffnungen des Wandhalters einhängbar sind. Zusätzlich zur Halteplatte ist am Gehäuse häufig in einem Bereich unterhalb der Halteplatte eine Anlageplatte angebracht, welche sich im aufgehängten Zustand des Zentralstaubsaugers an einem an der Wand im Bereich unterhalb des Wandhalters angebrachten Anlageteil abstützt.

Die U5 4,944,780 A und die U5 5,400,463 offenbaren gattungsgemäße Zentralstaubsauger. Bei beiden ist der Ansaugstutzen einstückig und damit in seiner Lage gegenüber dem Gehäuse unveränderbar mit dem Gehäuse verbunden.

Aufgabe der Erfindung ist, bei gattungsgemäßen Zentralstaubsaugern die Ausrichtung des Ansaugstutzens flexibler zu gestalten. Erfindungsgemäß gelingt dies durch einen Zentralstaubsauger mit den Merkmalen des Anspruchs 1.

Durch die Erfindung kommt es zu einer bedeutenden Vereinfachung und Erhöhung der Flexibilität bei der Montage des Ansaugstutzens, wobei eine Kombination der gerätefesten Teile der Wandhalteeinrichtung und des Ansaugstutzens in einer Baueinheit ermöglicht wird.

Weitere Vorteile und Einzelheiten der Erfindung werden im Folgenden anhand der beiliegenden Zeichnung erläutert. In der Zeichnung zeigen:
- Fig. 1: ein Ausführungsbeispiel eines mittels einer Wandhalteeinrichtung an einer Wand aufgehängten Zentralstaubsaugers in Seitenansicht;
- Fig. 2: und Fig. 3 die Halteplatte mit den daran angeordneten Teilen in perspektivischer Darstellung, aus verschiedenen Blickwinkeln;

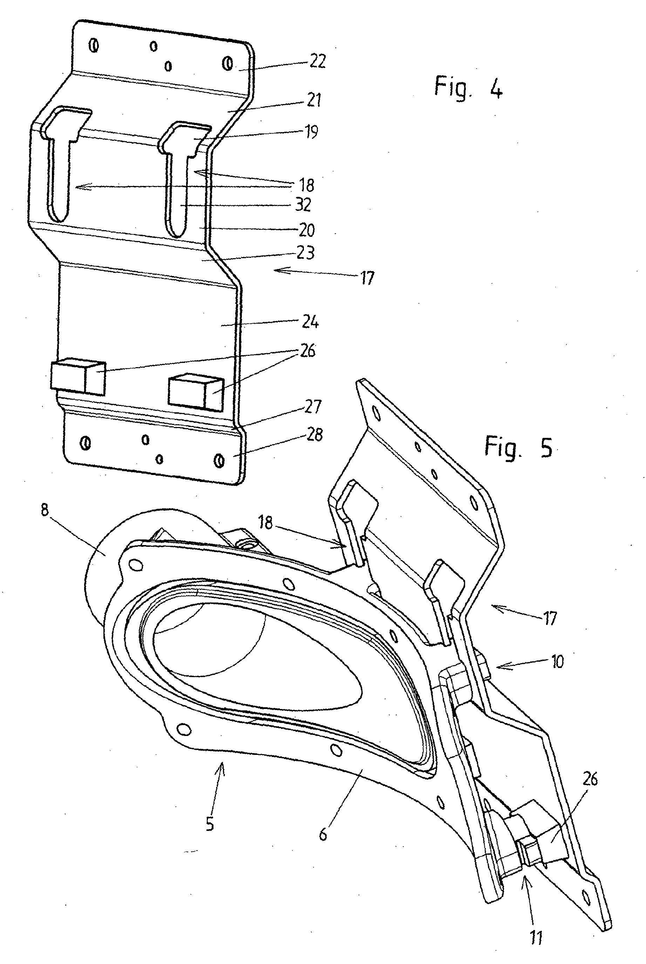

- Fig. 4: eine perspektivische Darstellung des Wandhalters;
- Fig. 5: eine perspektivische Darstellung der gerätefesten Baueinheit und des Wandhalters im ineinander eingehängten Zustand der Verbindungselemente;
- Fig. 6: und Fig. 7 Ansichten auf die in den Wandhalter eingehängte gerätefeste Baueinheit in zwei um 180° zueinander verschwenkten Stellungen und
- Fig. 8: eine schematische Darstellung eines weiteren Ausführungsbeispiels der Einhängeteile.

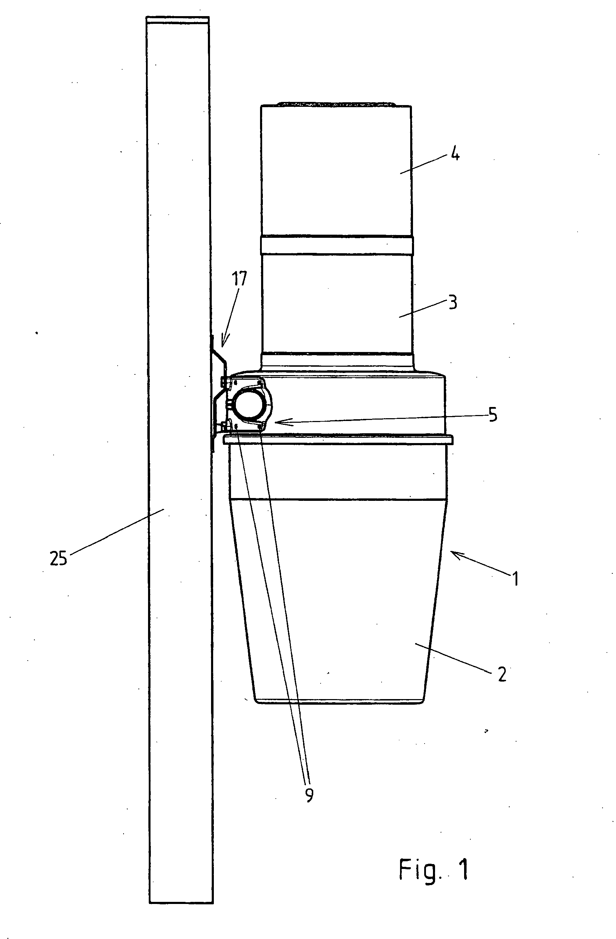

Der in Fig. 1 dargestellte Zentralstaubsauger weist ein Gehäuse 1 auf, welches miteinander verbindbare Gehäuseteile 2, 3 und 4 umfasst. Im Gehäuseteil 4 ist ein Staubsaugermotor angeordnet. Der Gehäuseteil 3 enthält einen Filter und die vom Zentralstaubsauger eingesaugten Teile gelangen in den im Gehäuseteil 2 enthaltenen Staubaufnahmeraum.

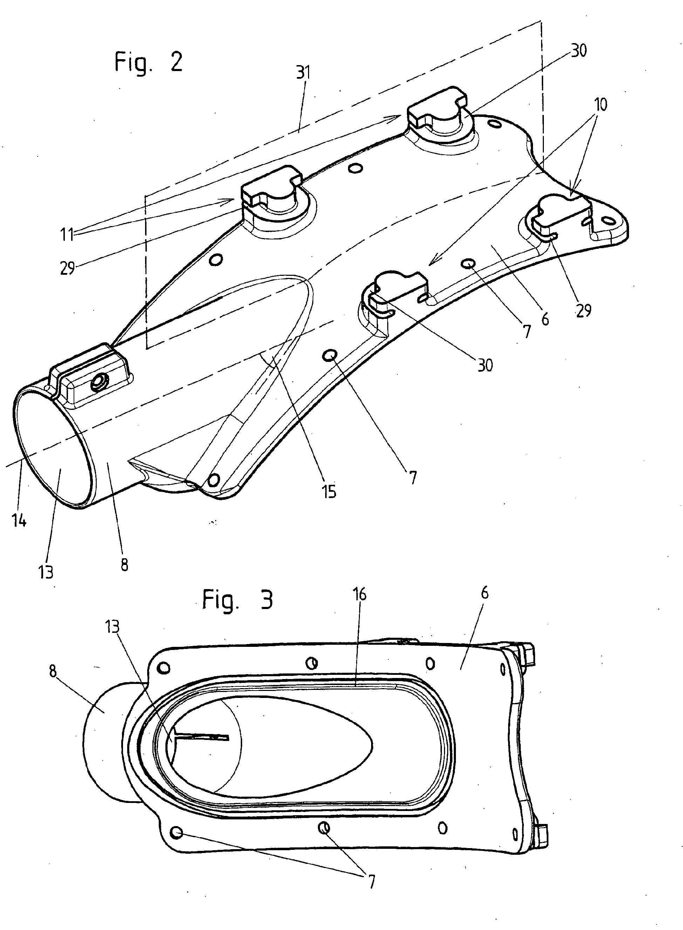

Am Gehäuseteil 3 ist die Baueinheit 5 montiert, welche den gerätefesten Teil der Wandhalteeinrichtung bildet. Die gerätefeste Baueinheit 5 umfasst, wie dies insbesondere aus den Fig. 2 und 3 ersichtlich ist, eine Halteplatte 6 und einen an der Halteplatte 6 angebrachten Ansaugstutzen 8. Die Halteplatte 6 ist durch Bohrungen 7 am Gehäuseteil 3 mittels Schrauben 9 (vgl. Fig. 1) anschraubbar. Auf der vom Gehäuseteil 3 abgewandten Seite der Halteplatte 6 sind an dieser Verbindungselemente 10, welche als Einhängeteile ausgebildet sind, und Abstützteile 11 angeordnet. Die Verbindungselemente 10 und die Abstützteile 11 sind identisch ausgebildet aber um 180° gegeneinander verdreht.

Durch den Ansaugstutzen 8 führt ein Saugkanal 13 ins Innere des Gehäuseteils 3, wobei der Saugkanal 13 die Halteplatte 6 durchsetzt. Die Längsachse 14 des Ansaugstutzens 8 schließt mit der Halteplatte 6 in ihrem Verbindungsbereich mit dem Ansaugstutzen 8 einen Winkel 15 von weniger als 60°, vorzugsweise von weniger als 45° ein. Vorzugsweise mündet der durch den Ansaugstutzen 8 und die Halteplatte 6 führende Saugkanal 13 im Wesentlichen tangential in den in diesem Bereich zylindrischen Gehäuseteil 3. Die angesaugte Saugluft kann dadurch gradlinig und ungestört in den Zentralstaubsauger eintreten, wodurch sowohl die Verluste der Saugkraft als auch die Verstopfungsgefahr an dieser Stelle minimiert werden.

An den Ansaugstutzen 8 ist ein in den Fig. nicht dargestelltes Saugrohr (starr oder flexibel) in herkömmlicher Weise anschließbar, wodurch der Zentralstaubsauger an das Saugleitungssystem angeschlossen wird.

Die Halteplatte 6 ist zur Anpassung an die Außenkontur des Gehäuseteils 3 gekrümmt ausgebildet, im gezeigten Ausführungsbeispiel somit in Stirnansicht gesehen kreisbogenförmig gekrümmt. An der dem Gehäuse 1 zugewandten Seite der Halteplatte 6 ist eine den Saugkanal 13 umgebende Dichtung 16 angebracht, wodurch der Saugkanal 13 in abgedichteter Weise durch das Gehäuse 1 durchgeführt wird.

Am Wandhalter 17 sind Verbindungselemente 18 angeordnet, in welche die Verbindungselemente 10 der Halteplatte 6 einhängbar sind. Die Verbindungselemente 18 sind als Einhängeöffnungen ausgebildet, die schmalere Bereiche 32 in Form von Langlöchern mit erweiterten Einhängeabschnitten 19 aufweisen. Der Wandhalter 17 umfasst eine gebogene Platte, die einen von der Wand distanzierten Tragsteg 20 besitzt. An seinem in der Montagelage oberen Ende ist der Tragsteg 20 über einen Verbindungssteg 21 mit einem Montagesteg 22 verbunden, der über Bohrungen an der Wand 25 anschraubbar ist. An seinem in Montagelage unteren Ende ist der Tragsteg 20 über einen Verbindungssteg 23 mit einem in der Montagelage des Wandhalters tiefer als der Verbindungssteg 23 und näher bei der Wand 25 liegenden (aber von der Wand 25 distanzierten) Abstützsteg 24 verbunden. An diesem Abstützsteg 24 sind elastische Anlageteile 26 zur Anlage der stirnseitigen Enden der Abstützteile 11 im aufgehängten Zustand des Zentralstaubsaugers angebracht. Die Anlageteile 26 können aus einem geeigneten Elastomer bestehen. Durch die elastische Ausbildung der Anlageteile 26, insbesondere in Verbindung mit der relativ dünnen, etwas federnden Ausbildung der Platte des Wandhalters 17 kann die Übertragung von Körperschall vom Zentralstaubsauger auf die Wand 25 minimiert werden. Beispielsweise kann die Platte des Wandhalters 17 aus Aluminium bestehen und eine Dicke im Bereich von 2 bis 3mm aufweisen oder aus Edelstahl bestehen und eine Dicke im Bereich zwischen 1 und 2,5mm aufweisen.

Der schmalere Bereich 32 der Einhängeöffnung ist im Tragsteg 20 ausgebildet und der Einhängeabschnitt erstreckt sich über den obersten Teil des Tragstegs 20 und einen daran anschließenden Teil des Verbindungsstegs 21.

Der Abstützsteg 24 ist an seinem in der Montagelage unteren Ende über einen Verbindungssteg 27 mit einem an der Wand anliegenden Montagesteg 28 verbunden, welcher über Bohrungen an der Wand 25 anschraubbar ist.

Die als Einhängeteile ausgebildeten Verbindungselemente 10 (und ebenso die gleich ausgebildeten Abstützteile 11) besitzen jeweils die Form eines Zapfens mit daran angeordneten Eingriffsnuten 29. Zum Einhängen des Zentralstaubsaugers in den Wandhalter 17 werden die Verbindungselemente 10 in die Einhängeabschnitte 19 der Verbindungselemente 18 des Wandhalters eingeführt, bis sie in den schmaleren Bereich 32 der jeweiligen Einhängeöffnung abgesenkt werden können, wobei die Ränder der Einhängeöffnungen in diesen schmaleren Bereichen 32 der Einhängeöffnungen in die Eingriffsnuten 29 eingeführt werden. Um ein zu tiefes Einführen der Zapfen in die Einhängeöffnungen zu verhindern, weisen diese anschleißend an die Eingriffsnuten 29 verbreiterte Abschnitte 30 auf, welche nicht durch die Einhängeabschnitte 19 durchführbar sind.

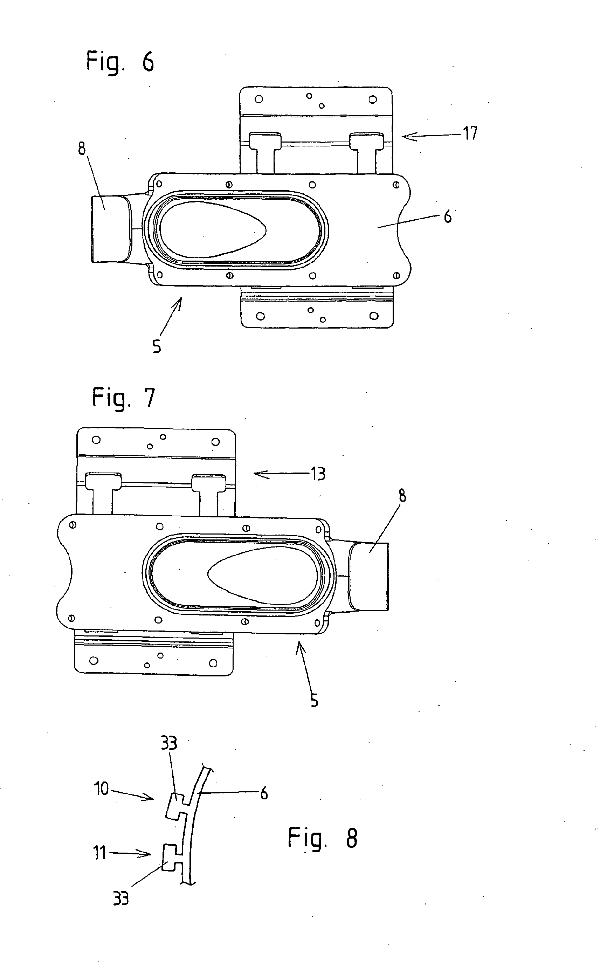

Die Baueinheit 5 ist in Bezug auf eine senkrecht zu ihr stehende und im aufgehängten Zustand des Zentralstaubsaugers horizontale Ebene 31, die in Fig. 3 durch strichlierte Linien angedeutet ist, spiegelsymmetrisch ausgebildet. Dadurch und durch die beschriebene Darstellung des Wandhalters 17 wird eine um 180° um eine horizontale, senkrecht zur Oberfläche des Gehäuses 1 im Bereich zwischen den Verbindungselementen 10 bzw. Abstützteilen 11 liegende Achse 12 verdrehte Montage der Baueinheit 5 am Gehäuse 1 ermöglicht, wie dies aus den Fig. 6 und 7 ersichtlich ist. Die Achse 12 liegt in der Ebene 31 und ist im aufgehängten Zustand des Zentralstaubsaugers im Wesentlichen horizontal. Je nach Platz- und Einbauverhältnissen kann dadurch der Ansaugstutzen 8 auf die gewünschte Seite ausgerichtet werden. Jeweils verläuft der Ansaugstutzen 8 seitlich neben den Verbindungselementen 10 und weist mit seinem freien Ende von diesen weg. Bei der Verdrehung der Baueinheit 5 um 180° tauschen die Verbindungselemente 10 und die Abstützteile 11 ihre Funktionen aus. Die vorher als Abstützteile 11 dienenden Teile dienen dann als Verbindungselemente und werden in die Verbindungselemente 18 eingehängt, während die früheren Verbindungselemente 10 zur Anlage an die Anlageteile 26 kommen.

Unterschiedliche Modifikationen des gezeigten Ausführungsbeispiels sind denkbar und möglich, ohne den Bereich der Erfindung zu verlassen. Beispielsweise könnten die an der Halteplatte 6 angebrachten Verbindungselemente 10 (und somit auch die Abstützteile 11) pilzförmig mit einem vergrößerten Kopf 33 ausgebildet sein, wie dies in Fig. 6 in Seitenansicht schematisch dargestellt ist. Denkbar und möglich wäre beispielsweise auch der Einsatz einer größeren oder kleineren Zahl an Verbindungselementen 10 bzw. Abstützteilen 11.

### Legende

### zu den Hinweisziffern:

- 1: Gehäuse
- 2: Gehäuseteil
- 3: Gehäuseteil
- 4: Gehäuseteil
- 5: Baueinheit
- 6: Halteplatte
- 7: Bohrung
- 8: Ansaugstutzen
- 9: Schraube
- 10: Verbindungselement
- 11: Abstützteil
- 12: Achse
- 13: Saugkanal
- 14: Längsachse
- 15: Winkel
- 16: Dichtung
- 17: Wandhalter
- 18: Verbindungselement
- 19: Einhängeabschnitt
- 20: Tragsteg
- 21: Verbindungssteg
- 22: Montagesteg
- 23: Verbindungssteg
- 24: Abstützsteg
- 25: Wand
- 26: Anlageteil
- 27: Verbindungssteg
- 28: Montagesteg
- 29: Eingriffsnut
- 30: Abschnitt
- 31: Ebene
- 32: Bereich
- 33: Kopf

## Patentansprüche

1. Zentralstaubsauger mit einem Gehäuse (1), einem Ansaugstutzen (8), durch den ein Saugkanal (13) führt, und einer Wandhalteeinrichtung, mittels der der Zentralstaubsauger an einer Wand (25) aufhängbar ist, wobei die Wandhalteeinrichtung eine am Gehäuse (1) befestigte Halteplatte (6) und einen an der Wand zu befestigenden Wandhalter (17) umfasst und an der Halteplatte (6) und am Wandhalter (17) ineinander einhängbare Verbindungselemente (10, 18) angeordnet sind, wobei der Ansaugstutzen (8) an der Halteplatte (6) angeordnet ist, wobei der Saugkanal (13) die Halteplatte (6) durchsetzt, **dadurch gekennzeichnet, dass** eine gerätefeste Baueinheit (5) die Halteplatte (6) und den an der Halteplatte (6) angebrachten Ansaugstutzen (8) umfasst, wobei die Baueinheit (5) am Gehäuse (1) montiert ist.

2. Zentralstaubsauger nach Anspruch 1, **dadurch gekennzeichnet, dass** die Längsachse (14) des Ansaugstutzens (8) mit der Halteplatte (6) in ihrem Verbindungsbereich mit dem Ansaugstutzen (8) einen Winkel von weniger als 60°, vorzugsweise weniger als 45° einschließt.

3. Zentralstaubsauger nach Anspruch 2, **dadurch gekennzeichnet, dass** der durch den Ansaugstutzen (8) und die Halteplatte (6) führende Saugkanal (13) im Wesentlichen tangential in das in diesem Bereich zylindrische Gehäuse (1) führt.

4. Zentralstaubsauger nach einem der Ansprüche 1 bis 3, **dadurch gekennzeichnet, dass** die Verbindungselemente (10, 18) mindestens ein Einhängeteil, vorzugsweise mindestens zwei Einhängeteile, und mindestens eine Einhängeöffnung, vorzugsweise mindestens zwei Einhängeöffnungen umfassen.

5. Zentralstaubsauger nach Anspruch 4, **dadurch gekennzeichnet, dass** das mindestens eine Einhängeteil an der Halteplatte (6) angebracht ist und die mindestens eine Einhängeöffnung am Wandhalter (17) angeordnet ist.

6. Zentralstaubsauger nach Anspruch 4 oder Anspruch 5, **dadurch gekennzeichnet, dass** das mindestens eine Einhängeteil pilzförmig mit einem in die Einhängeöffnung einhängbaren vergrößerten Kopf oder in Form eines Zapfens mit daran angeordneter Eingriffsnut (29), in die der Rand der Einhängeöffnung einführbar ist, ausgebildet ist.

7. Zentralstaubsauger nach Anspruch 5 oder Anspruch 6, **dadurch gekennzeichnet, dass** an der Halteplatte (6) mindestens ein Abstützteil (11) angebracht ist, welches im an der Wand aufgehängten Zustand des Zentralstaubsaugers an einem elastischen Anlageteil (26) des Wandhalters (17) anliegt.

8. Zentralstaubsauger nach einem der Ansprüche 1 bis 7, **dadurch gekennzeichnet, dass** die die Halteplatte (6), den Ansaugstutzen (8) und die Verbindungselemente (10) aufweisende Baueinheit (5) spiegelsymmetrisch im Bezug auf eine senkrecht zur Halteplatte (6) und im an der Wand aufgehängten Zustand des Zentralstaubsaugers horizontal liegende Ebene (31) ausgebildet ist, wobei diese Baueinheit (5) in zwei um 180° um eine in dieser Ebene (31) liegende und im an der Wand (25) aufgehängten Zustand des Zentralstaubsaugers horizontale Achse (12) verdrehten Stellungen am Gehäuse (1) des Zentralstaubsaugers montierbar ist.

9. Zentralstaubsauger nach Anspruch 8, **dadurch gekennzeichnet, dass** in den beiden um 180° verdrehten Stellungen die Funktionen des mindestens einen Verbindungselements (10) der Halteplatte (6) und des mindestens einen Abstützteils (11) der Halteplatte (6) austauschbar sind.

10. Zentralstaubsauger nach einem der Ansprüche 1 bis 9, **dadurch gekennzeichnet, dass** die Halteplatte eine an das Gehäuse (1) in ihrem Montagebereich angepasste Krümmung aufweist.

11. Zentralstaubsauger nach einem der Ansprüche 1 bis 10, **dadurch gekennzeichnet, dass** der Ansaugstutzen (8) seitlich neben dem mindestens einen Verbindungselement (10) verläuft.

12. Zentralstaubsauger nach einem der Ansprüche 1 bis 11, **dadurch gekennzeichnet, dass** der Wandhalter eine Platte aufweist, welche einen von der Wand (25) distanzierten Tragsteg (20) umfasst, in welchem zumindest ein Abschnitt des mindestens einen als Einhängeöffnung ausgebildeten Verbindungselements (18) verläuft.

13. Zentralstaubsauger nach Anspruch 12, **dadurch gekennzeichnet, dass** mit dem Tragsteg (20) über einen Verbindungssteg (23) ein Abstützsteg (24) verbunden ist, der in der Montagelage des Wandhalters (17) tiefer als der Verbindungssteg (21) und näher bei der Wand (25) als der Verbindungssteg (21) liegt.

14. Zentralstaubsauger nach Anspruch 13, **dadurch gekennzeichnet, dass** am Abstützsteg (24) mindestens ein elastisches Anlageteil (26) angebracht ist, an welchem in an der Wand (25) aufgehängten Zustand des Zentralstaubsaugers das mindestens eine Abstützteil (11) der Halteplatte (6) anliegt.

15. Zentralstaubsauger nach einem der Ansprüche 12 bis 14, **dadurch gekennzeichnet, dass** der Tragsteg (20) über einen Verbindungssteg (21) mit einem an der Wand anschraubbaren Montagesteg (22) verbunden ist, wobei sich die mindestens eine Einhängeöffnung über einen Teil des vom oberen Ende des Tragsteges (20) ausgehenden Verbindungssteges (21) erstreckt.

16. Zentralstaubsauger nach einem der Ansprüche 13 bis 15, **dadurch gekennzeichnet, dass** der Abstützsteg (24) von der Wand (25) distanziert ist und über einen Verbindungssteg (27) mit einem an der Wand anschraubbaren Montagesteg (28) verbunden ist.

17. Zentralstaubsauger nach einem der Ansprüche 1 bis 16, **dadurch gekennzeichnet, dass** die Halteplatte (6) und der Ansaugstutzen (8) einstückig ausgebildet sind.

18. Zentralstaubsauger nach einem der Ansprüche 1 bis 17, **dadurch gekennzeichnet, dass** das Gehäuse (1) miteinander verbindbare Gehäuseteile (2, 3, 4) umfasst, wobei in einem der Gehäuseteile (4) ein Staubsaugermotor angeordnet ist und einer der Gehäuseteile (3) einen Filter enthält und einer der Gehäuseteile (3) einen Staubaufnahmeraum enthält, in den vom Zentralstaubsauger eingesaugte Teile gelangen.

19. Zentralstaubsauger nach Anspruch 18, **dadurch gekennzeichnet, dass** die Baueinheit (5) an dem Gehäuseteil (3) montiert ist, welches den Filter enthält.

20. Zentralstaubsauger nach einem der Ansprüche 1 bis 19, **dadurch gekennzeichnet, dass** die Halteplatte (6) durch Bohrungen (7) am Gehäuse (1), vorzugsweise an einem einen Staubaufnahrneraurn enthaltenden Gehäuseteil (3), mittels Schrauben anschraubbar ist.

## Claims

1. A central vacuum cleaning system with a housing (1), an intake port (8), through which a suction channel (13) passes, and a wall holding means, by means of which the central vacuum cleaning system can be hung on a wall (25), the wall holding means comprising a holding plate (6) fastened to the housing (1) and a wall holder (17) to be fastened to the wall, and connecting elements (10, 18) which can be hung inside one another being arranged on the holding plate (6) and on the wall holder (17), the intake port (8) being arranged on the holding plate (6), the suction channel (13) penetrating the holding plate (6), **characterised in that** a structural unit (5) which is fixed to the apparatus comprises the holding plate (6) and the intake port (8) attached to the holding plate (6), the structural unit (5) being mounted on the housing (1).

2. A central vacuum cleaning system according to Claim 1, **characterised in that** the longitudinal axis (14) of the intake port (8) encloses with the holding plate (6) in its region of connection to the intake port (8) an angle of less than 60°, preferably less than 45°.

3. A central vacuum cleaning system according to Claim 2, **characterised in that** the suction channel (13) passing through the intake port (8) and the holding plate (6) passes substantially tangentially into the housing (1) which is cylindrical in this region.

4. A central vacuum cleaning system according to one of Claims 1 to 3, **characterised in that** the connecting elements (10, 18) comprise at least one hanging part, preferably at least two hanging parts, and at least one hanging opening, preferably at least two hanging openings.

5. A central vacuum cleaning system according to Claim 4, **characterised in that** the at least one hanging part is attached to the holding plate (6) and the at least one hanging opening is arranged on the wall holder (17).

6. A central vacuum cleaning system according to Claim 4 or Claim 5, **characterised in that** the at least one hanging part is designed in a mushroom shape with an enlarged head which can be hung in the hanging opening or in the form of a pin with an engagement groove (29) arranged thereon, into which the edge of the hanging opening is introduced.

7. A central vacuum cleaning system according to Claim 5 or Claim 6, **characterised in that** at least one supporting part (11) is attached to the holding plate (6), which part in the state of the central vacuum cleaning system when hung on the wall lies against an elastic contact part (26) of the wall holder (17).

8. A central vacuum cleaning system according to one of Claims 1 to 7, **characterised in that** the structural unit (15) having the holding plate (6), the intake port (8) and the connecting elements (10) is formed mirror-symmetrically relative to a plane (31) which lies at right-angles to the holding plate (6) and lies horizontally in the state of the central vacuum cleaning system when hung on the wall, this structural unit (5) being able to be mounted on the housing (1) of the central vacuum cleaning system in two positions turned by 180° about an axis (12) which lies in this plane (31) and is horizontal in the state of the central vacuum cleaning system when hung on the wall (25).

9. A central vacuum cleaning system according to Claim 8, **characterised in that** in the two positions turned by 180° the functions of the at least one connecting element (10) of the holding plate (6) and of the at least one supporting part (11) of the holding plate (6) are exchangeable.

10. A central vacuum cleaning system according to one of Claims 1 to 9, **characterised in that** the holding plate has a curvature adapted to the housing (1) in its mounting region.

11. A central vacuum cleaning system according to one of Claims 1 to 10, **characterised in that** the intake port (8) extends laterally next to the at least one connecting element (10).

12. A central vacuum cleaning system according to one of Claims 1 to 11, **characterised in that** the wall holder has a plate which comprises a carrier web (20) spaced apart from the wall (25), in which web at least one section of the at least one connecting element (18) formed as a hanging opening extends.

13. A central vacuum cleaning system according to Claim 12, **characterised in that** a supporting web (24) is connected to the carrier web (20) via a connecting web (23), which supporting web, in the mounting position of the wall holder (17), lies lower than the connecting web (21) and closer to the wall (25) than the connecting web (21).

14. A central vacuum cleaning system according to Claim 13, **characterised in that** at least one elastic contact part (26) is attached to the supporting web (24), against which part the at least one supporting part (11) of the holding plate (6) lies in the state of the central vacuum cleaning system when hung on the wall (25).

15. A central vacuum cleaning system according to one of Claims 12 to 14, **characterised in that** the carrier web (20) is connected via a connecting web (21) to a mounting web (22) which can be screwed to the wall, the at least one hanging opening extending over part of the connecting web (21) starting from the upper end of the carrier web (20).

16. A central vacuum cleaning system according to one of Claims 13 to 15, **characterised in that** the supporting web (24) is spaced apart from the wall (25) and is connected via a connecting web (27) to a mounting web (28) which can be screwed to the wall.

17. A central vacuum cleaning system according to one of Claims 1 to 16, **characterised in that** the holding plate (6) and the intake port (8) are formed in one piece.

18. A central vacuum cleaning system according to one of Claims 1 to 17, **characterised in that** the housing (1) comprises interconnectable housing parts (2, 3, 4), with a vacuum-cleaner motor being arranged in one of the housing parts (4) and one of the housing parts (3) containing a filter and one of the housing parts (3) containing a dust collection chamber, into which pass pieces sucked in by the central vacuum cleaning system.

19. A central vacuum cleaning system according to Claim 18, **characterised in that** the structural unit (5) is mounted on the housing part (3) which contains the filter.

20. A central vacuum cleaning system according to one of Claims 1 to 19, **characterised in that** the holding plate (6) can be screwed by means of screws through bores (7) to the housing (1), preferably to a housing part (3) containing a dust collection chamber.

## Revendications

1. Aspirateur central comportant un boîtier (1), un ajutage d'aspiration (8) traversé par un canal d'aspiration (13) et une installation de fixation murale pour accrocher l'aspirateur central à un mur (25),
l'installation de fixation murale se composant d'une plaque de fixation (6) fixée au boîtier (1) et un support mural (17) fixé au mur, et la plaque de fixation (6) et le support mural (17) comportant des éléments de liaison (10, 18) s'accrochant les uns dans les autres,
l'ajutage d'aspiration (8) étant prévu sur la plaque de fixation (6),
le canal d'aspiration (13) traversant la plaque de fixation (6),
**caractérisé en ce qu'**
une unité de construction (5), solidaire de l'appareil comprend la plaque de fixation (6) et l'ajutage d'aspiration (8) prévu sur la plaque de fixation (6),
l'unité de construction (5) étant montée sur le boîtier (1).

2. Aspirateur central selon la revendication 1,
**caractérisé en ce que**
dans la zone de jonction avec l'ajutage d'aspiration (8) l'axe longitudinal (14) de l'ajutage d'aspiration (8) fait, avec la plaque de fixation (6), un angle inférieur à 60° et de préférence inférieur à 45°.

3. Aspirateur central selon la revendication 2,
**caractérisé en ce que**
le canal d'aspiration (13) passant par l'ajutage d'aspiration (8) et la plaque de fixation (6) est pratiquement tangent dans cette zone au boîtier cylindrique (1).

4. Aspirateur central selon les revendications 1 à 3,
**caractérisé en ce que**
les éléments de liaison (10, 18) se composent d'au moins une pièce d'accrochage, de préférence d'au moins deux pièces d'accrochage et d'au moins un orifice d'accrochage, de préférence d'au moins deux orifices d'accrochage.

5. Aspirateur central selon la revendication 4,
**caractérisé en ce qu'**
au moins une pièce d'accrochage est prévue sur la plaque de fixation (6) et au moins un orifice d'accrochage est prévu sur le support mural (17).

6. Aspirateur central selon la revendication 4 ou 5,
**caractérisé en ce qu'**
au moins une pièce d'accrochage en forme de champignon est réalisée avec une tête agrandie s'accrochant dans l'orifice d'accrochage ou sous la forme d'un goujon muni d'une rainure d'engagement (29) dans laquelle pénètre le bord de l'orifice d'accrochage.

7. Aspirateur central selon la revendication 5 ou 6,
**caractérisé en ce que**
la plaque de fixation (6) comporte au moins une pièce d'appui (11) qui, lorsque l'aspirateur central est accroché au mur, s'appuie contre une pièce d'appui élastique (26) du support mural (17).

8. Aspirateur central selon les revendications 1 à 7,
**caractérisé en ce que**
l'unité de construction (5) comprenant, la plaque de fixation (6), l'ajutage d'aspiration (8) et les éléments de liaison (10), est symétrique par rapport à un plan perpendiculaire à la plaque de fixation (6) et horizontal lorsque l'aspirateur central est accroché au mur (31),
l'unité de construction (5) pouvant se monter sur le boîtier (1) de l'aspirateur central dans deux positions tournées l'une par rapport à l'autre de 180° autour d'un axe (12) situé dans ce plan (31) et horizontal lorsque l'aspirateur central est accroché au mur (25).

9. Aspirateur central selon la revendication 8,
**caractérisé en ce que**
dans les deux positions tournées de 180°, les fonctions d'au moins un élément de liaison (10) de la plaque de fixation (6) et d'au moins une pièce d'appui (11) de la plaque de fixation (6) sont inversées.

10. Aspirateur central selon les revendications 1 à 9,
**caractérisé en ce que**
la plaque de fixation présente une courbure adaptée à la zone de montage sur le boîtier (1).

11. Aspirateur central selon les revendications 1 à 10,
**caractérisé en ce que**
l'ajutage d'aspiration (8) passe à côté d'au moins un élément de liaison (10).

12. Aspirateur central selon les revendications 1 à 11,
**caractérisé en ce que**
le support mural comporte une plaque ayant une entretoise de support (20) écartée du mur (25) et par laquelle passe au moins un segment d'au moins un élément de liaison (18) réalisé comme orifice d'accrochage.

13. Aspirateur central selon la revendication 12,
**caractérisé en ce qu'**
une entretoise d'appui (24) est reliée à l'entretoise de support (20) par l'intermédiaire d'une entretoise de liaison (23), en position de montage du support mural (17) l'entretoise d'appui étant située plus bas que l'entretoise de liaison (21) et plus près du mur (25) que l'entretoise de liaison (21).

14. Aspirateur central selon la revendication 13,
**caractérisé en ce qu'**
au moins une pièce d'appui élastique (26) est prévue sur l'entretoise d'appui (24), pièce contre laquelle vient au moins une pièce d'appui (11) de la plaque de fixation (6) lorsque l'aspirateur central est en position accrochée au mur (25).

15. Aspirateur central selon les revendications 12 à 14,
**caractérisé en ce que**
l'entretoise de support (20) est reliée par une entretoise de liaison (21) à une entretoise de montage (22) vissée au mur, au moins un orifice d'accrochage s'étendant sur une partie de l'entretoise de liaison (21) en partant de l'extrémité supérieure de l'entretoise de support (20).

16. Aspirateur central selon les revendications 13 à 15,
**caractérisé en ce que**
l'entretoise d'appui (24) est écartée du mur (25) et elle est reliée par une entretoise de liaison (27) à une entretoise de montage (28) vissée au mur.

17. Aspirateur central selon les revendications 1 à 16,
**caractérisé en ce que**
la plaque de fixation (6) et l'ajutage d'aspiration (8) sont réalisés en une seule pièce.

18. Aspirateur central selon les revendications 1 à 17,
**caractérisé en ce que**
le boîtier (1) comprend des parties de boîtier (2, 3, 4) reliées l'une à l'autre et l'une des parties de boîtier (4) comporte un moteur d'aspirateur et l'une des parties de boîtier (3) comporte un filtre et l'une des parties de boîtier (3), une chambre de collecte de poussière dans laquelle débouchent les particules aspirées par l'aspirateur central.

19. Aspirateur central selon la revendication 18,
**caractérisé en ce que**
l'unité de construction (5) est montée sur la partie de boîtier (3) comportant le filtre.

20. Aspirateur central selon les revendications 1 à 19,
**caractérisé en ce que**
la plaque de fixation (6) est vissée par des vis dans des perçages (7) au boîtier (1) de préférence à la partie de boîtier (3) comportant la chambre de réception de poussière.
